# EUROPÄISCHE PATENTSCHRIFT

(11) **EP 1 916 902 B1**
(45) Veröffentlichungstag und Bekanntmachung des Hinweises auf die Patenterteilung: **16.12.2009**
(21) Anmeldenummer: 06792928.1
(22) Anmeldetag: 22.08.2006
(51) Int. Cl.: A22C 9/00

(54) **VERFAHREN ZUR BEHANDLUNG VON EINE ZELLSTRUKTUR AUFWEISENDEN ROHSTOFFEN IN DER FLEISCH-, FLEISCHNEBENPRODUKTE-, FISCH- UND SEAFOODVERARBEITENDEN NAHRUNGSMITTELINDUSTRIE**
METHOD FOR PROCESSING RAW MATERIALS HAVING A CELL STRUCTURE IN THE MEAT, MEAT BY-PRODUCTS, FISH AND SEAFOOD PROCESSING INDUSTRY
PROCEDE POUR TRAITER DES MATIERES BRUTES PRESENTANT UNE STRUCTURE CELLULAIRE DANS L'INDUSTRIE ALIMENTAIRE TRAITANT LA VIANDE, LES PRODUITS CARNES, LE POISSON, ET LES FRUITS DE MER

(30) Priorität: 24.08.2005 DE 102005040082; 29.12.2005 DE 102005062933
(43) Veröffentlichungstag der Anmeldung: 07.05.2008
(73) Patentinhaber: Deutsches Institut für Lebensmitteltechnik e.V., 49610 Quakenbrück (DE)
(72) Erfinder: KORTSCHACK, Fritz, 14089 Berlin (DE); HEINZ, Volker Dr.-Ing., 49610 Quakenbrück (DE); TÖPFL, Stefan Prof. Dr.-Ing., 49080 Osnabrück (DE)
(74) Vertreter: Meissner, Bolte & Partner
(86) Internationale Anmeldenummer: PCT/EP2006/065538
(87) Internationale Veröffentlichungsnummer: WO 2007/023155

(56) Entgegenhaltungen:
- CA-A1- 2 255 271
- DE-A1- 10 144 479
- GB-A- 2 318 719
- US-A- 5 137 817
- US-A1- 2006 011 504
- ANGERSBACH, HEINZ, KNORR: "Effects of pulsed electric fields on cell membranes in real food systems" INNOVATIVE FOOD SCIENCE & EMERGING TECHNOLOGIES, Bd. 1, Nr. 1, 2000, Seiten 135-149, XP002405200 in der Anmeldung erwähnt

## Beschreibung

Die Erfindung betrifft ein Verfahren zur Behandlung von eine Zellstruktur aufweisenden Rohstoffen in der fleisch-, fleischnebenprodukte-, fisch- und seafoodverarbeitenden Nahrungsmittelindustrie zum Zweck der Effektivierung und/oder Verkürzung von Prozessschritten sowie zur Erzielung eines bestimmten Zartheitsgrades der Rohstoffe gemäß Merkmalskombination des Patentanspruchs 1.

Bei der Herstellung von Rohpökelwaren spielt die fachgerechte Auswahl des Rohmaterials eine wesentliche Rolle für die Qualitätskriterien. So werden Umrötung, Haltbarkeit, Farbhaltung und Geschmack von der exakten Materialauswahl beeinflusst. Da es sich bei der Rohpökelware um ein Produkt handelt, das durch Salzen, Trocknen oder evtl. auch Räuchern haltbar gemacht wird, kommt der Hygiene der Rohmaterialgewinnung und -behandlung eine wichtige Bedeutung zu. Die Wasserbindung ist bei Kochpökelwaren, ähnlich wie bei der Herstellung von Brüh-, Sülz- und Kochwurst, limitierend für eine Verminderung der Einsatzmengen an Pökelhilfsstoffen oder Kochsalz. pH- und aW-Werte werden dabei in ähnlicher Weise beeinflusst. Kochpökelwaren wie Kochschinken, Schulter oder Kassler werden üblicherweise durch Injektion von Pökellake mit anschließendem mechanischem Massieren (Tumblen) hergestellt. Rohwürste werden aus rohem Rind- oder Schweinefleisch, kernigem Speck, Salz und Gewürzen gefertigt. Für das Rohwurstbrät werden Fleisch und Speck in einer Schneidewanne mit rotierenden Messern (Kutter) oder aber in einem Wolf zerkleinert, bis die gewünschte Körnung erreicht ist. Nach dem Zumischen von Salz und Gewürzen und/oder technischen Hilfsstoffen wird die Wurstmasse abgefüllt. Die Wursthüllen sollten atmungsaktiv, wasser- und dampfdurchlässig sowie elastisch sein, da die Würste im Laufe der Reifung Wasser abgeben und einer Schrumpfung unterliegen.

Brühwürste werden ebenso wie Rohwürste aus roh zerkleinertem Rind- oder Schweinefleisch, Speck sowie Salz und Gewürzen gefertigt. Beim Zerkleinern des Fleisches im Kutter wird gestoßenes Eis zugefügt. Dies kühlt die Wurstmasse und sorgt für einen gleichmäßigen, homogenen Fleischteig. Rote Brühwurstsorten werden unter Zusatz von Pökelsalz hergestellt, die weißen Sorten wie Gelb- und Weißwurst sowie Bratwürste ausschließlich mit Kochsalz. Brühwürste unterscheiden sich danach, wie fein das Brät gekuttert wurde und ob grobe Fleischstücke beigemengt sind. Die Würste werden dann gebrüht und zum Teil geräuchert. Beim Brühen in heißem Wasser oder Wasserdampf gerinnt das Fleischeiweiß und erstarrt, so dass die Wurst schnittfest wird. Für Kochpökelwaren kommt zum Auflockern des Bindegewebes sowie der Muskelfasern sowie zur Erzielung eines teilweisen Eiweißaufschlusses das so genannte Poltern (Tumblen) zur Anwendung. In diesem Sinn behandelte Rohmaterialien können stärker quellen, die Wasserbindung wird verbessert und das Verkleben stückiger Anteile, wie etwa bei der Produktion von Formschinken gefordert, wird verbessert. Des weiteren erhöht das Tumbeln die Zartheit und bewirkt eine bessere und schnellere Verteilung von zugegebenen Pökel- und Hilfsstoffen. Es hat sich jedoch zurückgehend auf Versuche gezeigt, dass auch getumbeltes Rohmaterial nur eine unzureichende Quellung des Eiweißvolumens sowie eine relativ ungleichmäßige Textur aufweist, so dass ausreichende Erfolge bezüglich der Zartheit, des Eiweißaufschlusses und der Wasserbindung nur durch die Zugabe von Kutterhilfsmitteln gewährleistet sind. Derartige Kutterhilfsmittel sind beispielsweise phosphathaltige Stoffe.

Im Fertigungs- und Produktionsprozess bedarf es zur Erzielung einer ausreichenden Wirkung des Kutterns oder Tumbelns neben dem hohen Eintrag an mechanischer Energie und damit verbundenen, thermischen Produktschädigungen eines nicht unerheblichen Zeitaufwands. Dies führt insbesondere durch die notwendige Kühlung der entsprechenden Maschinen zu höheren Kosten.

Beispielsweise aus der Publikation Angersbach, Heinz, Knorr; "Effects of pulsed electric fields on cell membranes in real food systems"; Innovative Food Science & Emerging Technologies 1 (2000), Seite 135 bis 149, oder Angersbach, Heinz, Knorr; Electrophysiological Model of Intact and Processed Plant Tissues: Cell Disintegration Criteria; Biotechnol.Prog. 1999, 15, 753 bis 762 ist die Wirkung elektrischer Felder zum Zweck der Elektroporation insbesondere von pflanzlichen Zellmembranen vorbekannt.

Es besteht die Aufgabe der Erfindung, ein weiterentwickeltes Verfahren zur Behandlung von eine Zellstruktur aufweisenden Rohstoffen in der fleisch-, fleischnebenprodukte-, fisch- und seafoodverarbeitenden Nahrungsmittelindustrie zum Zweck der Effektivierung und/oder Verkürzung von Prozessschritten sowie zur Erzielung eines bestimmten Zartheitsgrades der Rohstoffe anzugeben, wobei das Verfahren neben der angestrebten Verkürzung der Behandlungsdauer von Rohwaren auch gleichzeitig dazu beitragen soll, die ansonsten notwendige Beigabe von zartmachenden und/oder wasserbindenden Zugabemitteln zu reduzieren. Das Verfahren soll sowohl für die Herstellung und Behandlung von Kochpökelware als auch allgemein für die Produktion von Brüh-, Sülz-, Kochwurst oder dergleichen geeignet sein.

Die Lösung der Aufgabe der Erfindung erfolgt durch das im Patentanspruch 1 definierte Verfahren.
Demnach wird erfindungsgemäß eine Vorbehandlung des Rohstoffs wie z. B. Fleisch oder Innereien mittels Elektroporation vorgenommen, wodurch sichergestellt ist, dass der notwendige Zell- und Eiweißaufschluss während eines sich anschließenden, verkürzt durchführbaren Kutter- und/oder Wolfvorgangs umfassend erfolgt.
Dem Rohmaterial kann vor, während oder nach der Elektroporation mittels Injektion von Lake, d.h. einem Wasser/Salz-Gemisch möglicherweise auch anderen Hilfsstoffen, aber auch durch Zugabe von Salz und Wasser und/oder Hilfsstoffen während des Kutterns oder Wolfens, in einer für das Erzielen einer stabilen Emulsion erforderlichen Menge hinzugefügt werden. Die Elektroporation sichert einen umfassenden Zellaufschluss, so dass sich der Kutter- oder Wolfvorgang lediglich auf das Zerkleinern und Vermischen von Magerfleisch, Salz, Fett, Gewürzen, Hilfsstoffen und eventuellen Einlagen wie Grobbestandteilen beschränkt. Hierdurch kann der Produktionsprozess insgesamt beschleunigt werden. Auch besteht die Möglichkeit, dass Kuttermesser eingesetzt werden, die aufgrund definierter Schlagwirkung zu einer weiteren Verkürzung des Produktionsprozesses beitragen.
Der Kuttervorgang kann entfallen, wenn zum Zerkleinern des Rohmaterials ein mit geeigneten (feinen) Lochscheiben und zweckmäßigem Förderwerkzeug ausgestatteter Wolf, Füll- und/oder Mischwolf eingesetzt wird.

Eine Vorbehandlung von Magerfleisch-Grobbestandteilen zur Herstellung von Bierschinken, Jagdwurst oder Ähnlichem mittels Elektroporation und anschließender Lakeinjektion ermöglicht eine optische Aufwertung der Fertigprodukte, da das Fleischvolumen aufgrund verbesserter Wasserbindung während des Erhitzungsvorgangs weniger stark schrumpft.

Bei einer erfindungsgemäßen Vorbehandlung des Fleisches mittels Elektroporation kann zweckmäßigerweise im Anschluss ein (oder mehrere) (Füll-) Wolf/Wölfe eingesetzt bzw. kombiniert werden, da dann lediglich die Aufgaben des Zerkleinerns und Vermischens der Einzelkomponenten zu übernehmen sind.

Die Elektroporation erfolgt durch Anlegen eines elektrischen Feldes mit einer Feldstärke >0,5 kV/cm und dem sich hierdurch ergebenden Energieeintrag in das zu behandelnde eine Zellstruktur aufweisende Produkt.

Durch die Feldeinwirkung wird die Semipermeabilität der Zellmembran reversibel oder irreversibel aufgehoben.

Die elektroporierte Zellmembran und die damit verbundene Aufhebung der Stofftransportbarriere zwischen Zellinnerem und der Umgebung schafft durch beschleunigte Diffusions- und Massentransportvorgänge die Voraussetzung zur Gleichverteilung von Lakeflüssigkeit, die entweder injiziert wird oder die durch Einlegen des Rohprodukts in die Lake bereitgestellt ist. Die erhaltene poröse Matrix erhöht darüber hinaus die Wasserbindung, wobei dieser Effekt durch eingebrachte Elektrolyte oder weitere wasserbindende Substanzen wie Zucker, Polysaccharide oder Ähnliches noch weiter verbessert werden kann. Darüber hinaus kann durch verbesserten Massentransport innerhalb des zellulären Gewebes erfindungsgemäß eine etwa bei der Herstellung von Rohschinken angewendete Aufnahme trocken applizierter Gewürze, Salz oder Hilfsstoffe beschleunigt werden.

Bei einer bevorzugten Ausführungsform der Erfindung ist sichergestellt, dass die einzubringende Elektroenergie mindestens 5 kJ/kg behandeltes Produkt beträgt. Die Obergrenze des Energieeintrags ist so bestimmt, dass thermische Einwirkungen nicht die primäre Ursache der Veränderungen der Produktstruktur darstellen.

Das elektrische Feld wird durch Einkoppeln, und zwar entweder durch Direktkontakt mit Hilfe von Elektroden oder über leitende Flüssigkeiten erzeugt, wobei die zu behandelnden Produkte ganz oder teilweise in die leitende Flüssigkeit eingelegt werden.

Aufgrund der erhaltenen porösen Struktur und die dadurch erzielte höhere Wasserbindung gelingt es erfindungsgemäß, eine verbesserte Zartheit der hergestellten Produkte zu erreichen.

Es hat sich in überraschender Weise gezeigt, dass die gewünschte Zartheit von Fleisch auch dann erreicht wird, wenn dem erfindungsgemäß behandelten Produkt nach der Elektroporation keine weitere Flüssigkeit zugefügt wird.

In einer Ausführungsform der Erfindung besteht die Möglichkeit, das Verfahren der Elektroporation und den resultierenden Zellaufschluss zum gezielten Entzug von Flüssigkeiten zu nutzen. Ein solcher Entzug von Flüssigkeit dient als ergänzender Produktsschritt zur Herstellung von Roh- und Dauerwaren. Der selektive Entzug von Wasser kann mittels Anwendung geeigneter Triebkräfte wie Vakuums im Vakuumkutter, Vakuumwolf, aber auch in jedem Vakuumbehälter sowie auch Konzentrationsgradienten durch Einsatz hygroskopischer Stoffe und/oder trockener Luft oder mechanischen Einwirkungen wie Pressen vorgenommen werden.
Die erfindungsgemäß hier eingesetzte Elektroporation ermöglicht einen beschleunigten, selektiven Wasserentzug in einer keimarmen Umgebung, nämlich im Unterdruck, wobei zusätzlich hygroskopische Stoffe im Behandlungsraum vorgesehen sein können. Neben herkömmlichen Rohstoffen können auch sehr frische, auch schlachtwarme Fleischstücke gezielt unter Nutzung der Elektroporation entfeuchtet werden.

Die Elektroporation unterstützt insbesondere die Bearbeitung sehr frischer Rohstoffe, wie z.B. schlachtwarmes Fleisch, für die Herstellung von Rohdauerwaren wie Rohschinken oder Rohwurst, wobei hierdurch der Einsatz von probiotischen Stoffen bei gleichzeitiger Reduktion der Einsatzmengen von Kochsalz und Nitrit bzw. Nitrat erfolgen kann. Durch die Elektroporation des frischen Rohmaterials wird neben der Verbesserung von Massentransportvorgängen, und bei Anwendung geeigneter Triebkräfte des Feuchtigkeitsentzuges, auch der Zartheitsgrad wesentlich erhöht, wobei diese Eigenschaft auch bei einer weiteren Verarbeitung zu Rohpökelprodukten erhalten bleibt.

Die Elektroporation gemäß der Erfindung dient demnach der verbesserten und gleichmäßigen Aufnahme und Bindung von hinzugefügten Flüssigkeiten in Produkten, die unzerkleinert und/oder zerkleinert erst nach einer weiteren Behandlung, wie nach einem Temperieren, Räuchern oder Einarbeiten in andere Rohprodukte vermarktet werden.

Ebenso ist aber die Elektroporation auch dann von wesentlichem Vorteil, wenn das Ziel besteht, Pökellake in Kochpökelwaren in effektiver Weise, insgesamt verfahrensoptimierend, einzubringen, wobei hier die Elektroporation vor, während oder nach einer Injektion von Spritzlake möglich ist. Durch die Elektroporation wird auch bei der Herstellung von Kochpökelwaren der Zartheitsgrad verbessert. Das gemäß dem Ausführungsbeispiel behandelte Rohprodukt wird nach Erhitzen als Kochpökelware oder Kasseler dem Verbraucher zugeführt.

Bei einer Ausführungsform der Erfindung gelingt es, durch Elektroporation die Rohprodukte in ihrer Zellstruktur so zu verändern, dass wie etwa bei der Marination durchgeführt Flüssigkeiten aus einem Umgebungsbad, d.h. ohne Injektion, in signifikanter Weise aufgenommen werden können.

Die Erfindung soll nachstehend anhand eines Ausführungsbeispiels sowie einer figürlichen Darstellung näher erläutert werden.

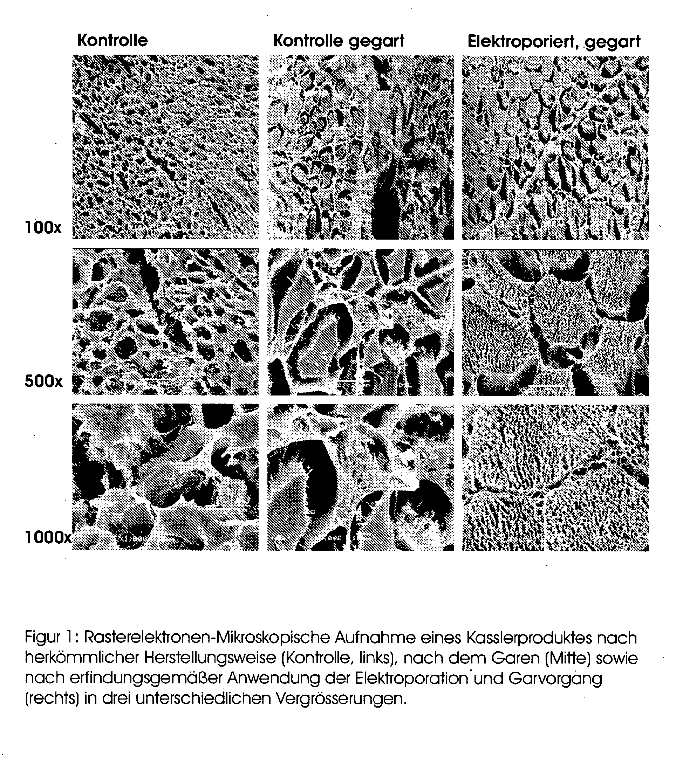

Die Figur 1 zeigt hierbei eine mikroskopische Schnittaufnahme eines Kasselerprodukts in üblicher, nach dem Stand der Technik hergestellter Weise, d.h. getumbelt und gegart. Eine weitere Darstellung zeigt ein ähnliches Kasselerprodukt, welches jedoch vor dem Tumbeln und Garen einer erfindungsgemäßen Elektroporation unterzogen wurde.

Wie in der letzteren Darstellung erkennbar, ist das Eiweißvolumen ausgedehnt, die Textur besser und gleichmäßiger und insgesamt die Produktqualität erhöht, und zwar ohne dass die Zugabe von Kutterhilfsmitteln notwendig wurde.

Bei dem Verfahren zur Behandlung von eine Zellstruktur aufweisenden Rohstoffen in der fleisch- und wurstverarbeitenden Lebensmittelindustrie gemäß nachstehendem Ausführungsbeispiel ist dieses zunächst dadurch gekennzeichnet, dass ein durch Anlegen eines elektrischen Feldes mit einer Feldstärke >0,5 kV/cm ein Energieeintrag in das zu behandelnde.Produkt erfolgt, wobei als Energieobergrenze der Wert gewählt wird, der sicherstellt, dass eintretende Veränderungen der Produktstruktur nicht primär thermisch bedingt sind.

Mit Hilfe des elektrischen Feldes erfolgt ein Elektroporieren der Zellmembran mit sich hierdurch einstellender Aufhebung der Stofftransportbarriere zwischen Zellinnerem und Umgebung. Durch diese Maßnahme kann sowohl ein beschleunigtes und gleich verteiltes Aufnehmen von flüssigen Medien in die geschaffene poröse Zellmatrix erfolgen oder aber beim Anlegen geeigneter Triebkräfte wie etwa eines Vakuums oder Konzentrationsgradienten Feuchtigkeit aus der Zellmatrix entfernt werden.

Das flüssige Medium, welches bedingt durch die Elektroporation beschleunigt und gleich verteilt in die Zellmatrix eindringt, kann weitere, die Produkteigenschaften bestimmende Substanzen enthalten.
Die Elektroporation kann dabei beispielsweise in einem Flüssigkeitsbad, das Produkteigenschaften veränderte Substanzen enthält, erfolgen.

Es ist bei der Anwendung der Elektroporation im Flüssigkeitsbad dafür Sorge zu tragen, dass der Leitfähigkeitswert des Bades in einem für die Impulserzeugungsanlage geeigneten Bereich liegt, vorzugsweise wird diese geringer als die Leitfähigkeit des zu behandelnden Rohstoffs eingestellt.

Alternativ, aber auch ergänzend, kann das elektrische Feld über Elektroden, z.B. Nadel, Walzen, Gitter, Durchfluss, oder Platten angelegt werden. Bei einer Ausgestaltung der Erfindung weisen die Nadelelektroden eine Kanülenform auf und können der gleichzeitigen oder zeitversetzten Zuführung von Injektionsflüssigkeit, z.B. Spritzlake, dienen.

Die Elektroporation kann vor oder erst nach einem Flüssigkeitsinjektionsschritt oder Marination oder aber diesen Schritt begleitend bzw. ergänzend ausgeführt werden.

Es besteht aber auch die Möglichkeit, Rohwurstbrät mittels Elektroporation zu behandeln und dieses so behandelte Brät dann in an sich bekannter Weise, allerdings auch mit verringerter Kutterzeit sowie eventuell verringerten Einsatzmengen an Kutterhilfsstoffen weiter zu verarbeiten.

## Patentansprüche

1. Verfahren zur Behandlung von eine Zellstruktur aufweisenden Rohstoffen in der fleisch-, fleischnebenprodukte-, fisch- und seafoodverarbeitenden Nahrungsmittelindustrie zum Zweck der Effektivierung und/oder Verkürzung von Prozessschritten sowie zur Erzielung eines bestimmten Zartheitsgrades der Rohstoffe,
wobei
- ein Anlegen eines elektrischen Feldes mit einer Feldstärke >0,5 kV/cm und Energieeintrag in das zu behandelnde Zellstruktur-Produkt mit einer Energieobergrenze erfolgt, welche das Auftreten thermisch bedingter Veränderungen im Produkt ausschließt;
- ein Elektroporieren der Zellmembran und ein hierdurch resultierende Aufheben der Stofftransportbarriere zwischen Zellinnerem und Umgebung sowie den einzelnen Zellen erfolgt;
- ein beschleunigtes und gleich verteiltes Aufnehmen von flüssigen Medien in die geschaffene poröse Matrix aus Fleisch-, Fleischnebenprodukte-, Seafood und Fischzellen erfolgt, wobei im flüssigen Medium weitere, die Produkteigenschaften bestimmende Substanzen gelöst oder enthalten sind.

2. Verfahren nach Anspruch 1,
**dadurch gekennzeichnet, dass**
die Elektroporation in einem mit Elektroden ausgestattetem Flüssigkeitsbad erfolgt.

3. Verfahren nach einem der vorangegangenen Ansprüche,
**dadurch gekennzeichnet, dass**
das elektrische Feld alternativ oder ergänzend zum leitfähigen Flüssigkeitsbad über Kontaktelektroden erzeugt wird.

4. Verfahren nach Anspruch 3,
**dadurch gekennzeichnet, dass**
verschiedene Elektrodenformen zur Anwendung kommen können, z.B. Nadel-, Flächen-, Walzen, Kanülen-, Waffel-, Gitter-, Hohl-, Durchflusselektroden.

5. Verfahren nach Anspruch 1,
**dadurch gekennzeichnet, dass**
die Elektroporation vor, während oder nach einem Flüssigkeitsinjektionsschritt ausgeführt wird.

6. Verfahren nach Anspruch 1,
**dadurch gekennzeichnet, dass**
die Elektroporation vor, während oder nach dem Vermischen und/oder Zerkleinern der Einzelkomponenten entsprechend einer Rezeptur ausgeführt wird.

7. Verfahren nach einem der vorangegangenen Ansprüche,
**dadurch gekennzeichnet, dass**
die Behandlung an zerkleinerten Rohmaterialien durchgeführt wird.

8. Verfahren nach einem der vorangegangenen Ansprüche,
**dadurch gekennzeichnet, dass**
das behandelte Rohprodukt als Frischfleischzubereitung oder nach Erhitzen als Rohmaterial zur Herstellung anderer Produkte dient, z.B. Sülzen.

9. Verfahren nach einem der Ansprüche 1 bis 8,
**dadurch gekennzeichnet, dass**
das behandelte Rohprodukt zu Roh-, Koch-, Sülz- oder Brühwurst weiter verarbeitet wird.

10. Verfahren nach einem der vorangegangenen Ansprüche,
**dadurch gekennzeichnet, dass**
dem flüssigen Medium Gewürze, Salze, probiotische Stoffe, technische Hilfsstoffe oder dergleichen Mittel zugegeben werden.

11. Verfahren nach einem der vorangegangenen Ansprüche,
**dadurch gekennzeichnet, dass** nach der Elektroporation sich ein Schritt des beschleunigten Entzugs von Zellflüssigkeit durch Anwendung geeigneter Triebkräfte, insbesondere Unterdruckeinfluss, Konzentrationsgradienten durch Einsatz von Elektrolyten oder trockener Luft oder mechanische Entfernung anschließt.

12. Verfahren nach einem der vorangegangenen Ansprüche,
**gekennzeichnet durch**
Anwendung zum Zweck des Zartmachens von rohem Fleisch als Rohstoff für die Herstellung anderer Produkte, z.B. Rohpökelware.

13. Verfahren nach einem der vorangegangenen Ansprüche,
**dadurch gekennzeichnet, dass**
ein gepulstes elektrisches Feld während der Elektroporation erzeugt wird.

## Claims

1. Method for treating raw materials having a cell structure in the meat, meat by-product, fish and seafood processing food industry for the purpose of optimizing and/or reducing processing steps and for obtaining a certain degree of tenderness of the raw materials,
wherein
- an electric field having a field strength of >0.5 kV/cm is applied and energy is supplied into the cell structure product to be treated, with an upper energy limit that excludes the occurrence of thermally caused modifications in the product;
- the cell membrane is electroporated and, as a result thereof, the barrier to the transportation of substances between the cell interior and the exterior and the individual cells is eliminated;
- an accelerated and uniformly distributed absorption of liquid media by the created porous matrix of meat, meat by-product, seafood and fish cells is effected, with additional substances determining the product properties being dissolved or contained in the liquid medium.

2. Method according to claim 1,
**characterized in that**
the electroporation is carried out in a liquid bath provided with electrodes.

3. Method according to one of the preceding claims,
**characterized in that**
alternatively or supplementally to the conductive liquid bath the electric field is generated by contact electrodes.

4. Method according to claim 3,
**characterized in that**
different types of electrodes can be applied, e.g. needle, plate, roller, cannula, waffle, grid, hollow, flow type electrodes.

5. Method according to claim 1,
**characterized in that**
the electroporation is carried out before, during or after a liquid injection step.

6. Method according to claim 1,
**characterized in that**
the electroporation is carried out before, during or after the mixing and/or mincing of the individual components according to a recipe.

7. Method according to one of the preceding claims,
**characterized in that**
the treatment is carried out with minced raw materials.

8. Method according to one of the preceding claims,
**characterized in that**
the treated raw product serves the production of other products, e.g. jellied meat, as fresh meat or, after having been heated, as raw material.

9. Method according to one of claims 1 to 8,
**characterized in that**
the treated raw product is processed further to raw, cooked, jellied or scalded sausages.

10. Method according to one of the preceding claims,
**characterized in that**
spices, salts, probiotic substances, technical auxiliary substances or the like substances are added to the liquid medium.

11. Method according to one of the preceding claims,
**characterized in that**
the electroporation is followed by a step of accelerated removal of cell fluid by applying suitable driving forces, especially vacuum influence, concentration gradients by applying electrolytes or dry air, or mechanical removal.

12. Method according to one of the preceding claims,
**characterized by**
using, for the purpose of tenderizing, raw meat as raw material for the production of other products, e.g. raw cured products.

13. Method according to one of the preceding claims,
**characterized in that**
a pulsed electric field is generated during the electroporation.

## Revendications

1. Procédé pour le traitement de matières premières présentant une structure cellulaire dans l'industrie alimentaire traitant la viande, les produits camés, le poisson et les fruits de mer dans le but de rendre plus efficace et/ou de raccourcir les étapes de traitement ainsi que pour atteindre un degré déterminé de tendreté des matières premières,
dans lequel
- l'application d'un champ électrique avec une intensité de champ > 0,5 kV/cm et un apport d'énergie dans le produit à structure cellulaire à traiter a lieu avec une limite supérieure d'énergie qui exclut l'apparition de modifications dues à des causes thermiques dans le produit ;
- il se produit une formation de pores par voie électrique dans la membrane cellulaire et en résultat de celle-ci une suppression de la barrière vis-à-vis du transport des matières entre l'intérieur des cellules et l'environnement, ainsi qu'entre les cellules individuelles ;
- il se produit une absorption accélérée et également répartie de milieux fluides dans la matrice poreuse réalisée à partir de produits à base de viande, de produits camés, de fruits de mer et de cellules de poissons, et d'autres substances qui déterminent les propriétés du produit sont dissoutes ou contenues dans le milieu fluide.

2. Procédé selon la revendication 1,
**caractérisé en ce que** la formation de pores par voie électrique a lieu dans un bain liquide équipé d'électrodes.

3. Procédé selon l'une des revendications précédentes,
**caractérisé en ce que** le champ électrique est généré via des électrodes de contact à la place de ou en complément au bain de liquide conducteur.

4. Procédé selon la revendication 3,
**caractérisé en ce que** l'on emploie diverses formes d'électrodes, par exemple des électrodes en forme d'aiguilles, des électrodes surfaciques, des électrodes en forme de cylindres, de canules, de gaufres, de grillages, des électrodes creuses et des électrodes traversées par un flux.

5. Procédé selon la revendication 1,
**caractérisé en ce que** la formation de pores par voie électrique est effectuée pendant ou après une étape d'injection de liquide.

6. Procédé selon la revendication 1,
**caractérisé en ce que** la formation de pores par voie électrique est effectuée pendant ou après le mélangeage et/ou le broyage des composants individuels, en fonction d'une recette.

7. Procédé selon l'une des revendications précédentes,
**caractérisé en ce que** le traitement est appliqué sur des matières premières broyées.

8. Procédé selon l'une des revendications précédentes,
**caractérisé en ce que** la matière première traitée sert de préparation de viande fraîche ou bien, après chauffage, à titre de matière première pour la fabrication d'autres produits (par exemple gelée).

9. Procédé selon l'une des revendications 1 à 8,
**caractérisé en ce que** la matière première traitée est transformée en saucisse crue, en saucisse à griller, en charcuterie en gelée, ou en saucisse à cuire.

10. Procédé selon l'une des revendications précédentes,
**caractérisé en ce que** des épices, du sel, des matières probiotiques, des agents techniques ou des agents similaires sont ajoutés au milieu fluide.

11. Procédé selon l'une des revendications précédentes,
**caractérisé en ce qu'**après la formation de pores par voie électrique fait suite une étape d'extraction accélérée de liquide cellulaire par application de forces appropriées, en particulier sous l'influence d'une dépression, des gradients de concentration par emploi d'électrolytes ou d'air sec ou par enlèvement mécanique.

12. Procédé selon l'une des revendications précédentes,
**caractérisé par** l'application dans le but d'attendrir de la viande crue à titre de matière première pour la fabrication d'autres produits, comme par exemple des produits en saumure.

13. Procédé selon l'une des revendications précédentes,
**caractérisé en ce que** l'on génère un champ électrique pulsé pendant la formation de pores par voie électrique.
